# EUROPEAN PATENT SPECIFICATION

(11) **EP 3 689 827 B1**
(45) Date of publication and mention of the grant of the patent: **19.04.2023**
(21) Application number: 20151970.9
(22) Date of filing: 15.01.2020
(51) Int. Cl.: C02F 1/00, C02F 3/22, C02F 3/12

(54) **A DEVICE FOR AIR STRIPPING REFLUX AND SEDIMENTATION AND THE METHOD THEREOF**
EINE VORRICHTUNG ZUM LUFTSTRIPPENRÜCKFLUSS UND SEDIMENTATION UND VERFAHREN DAFÜR
UN DISPOSITIF DE REFLUX POUR LE STRIPPING DE L'AIR ET LA SÉDIMENTATION ET PROCÉDÉ CORRESPONDANT

(30) Priority: 23.01.2019 CN 201910063708; 23.01.2019 CN 201920112672 U
(43) Date of publication of application: 05.08.2020
(73) Proprietor: Ningbo Shangfuyuan Environmental Technology Co., Ltd., Ningbo, Zhejiang (CN)
(72) Inventor: ZHOU, Chunjiang, Ningbo, Zhejiang (CN)
(74) Representative: Hofstetter, Schurack & Partner

(56) References cited:
- CN-A- 106 045 021
- GB-A- 2 110 658
- US-A- 4 211 657
- US-A1- 2005 000 873

## Description

### FIELD OF THE INVENTION

The invention relates to sewage treatment and, in particular, to a device for air stripping reflux and sedimentation and the method thereof.

### BACKGROUND OF THE INVENTION

Aerobic processes are widely used in sewage treatment in various industries. The traditional aerobic process requires the installation of a sedimentation tank and a scraper. The precipitated sludge is returned to the aerobic tank through a reflux pump to continue to participate in the biodegradation process. Sedimentation tanks often require a scraper to prevent dead corners. The mechanical impeller of a conventional reflux pump can easily break aerobic activated sludge, which is detrimental to pollutant degradation and subsequent precipitation. Moreover, the conventional reflux pump has high energy consumption and cannot achieve a huge reflux. The sedimentation tank increases the occupied space, and the scraper and reflux pump increase energy consumption and required maintenance workload.

Bio-multiplication processes use air stripping reflux instead of the reflux pump to solve the problem of breaking aerobic activated sludge and to realize a large-scale reflux. However, it is still necessary to build an independent air stripping reflux function zone and a gas supply specifically for air stripping reflux. The bio-multiplication process still requires a sedimentation tank for mud-water separation.

Currently, the aerobic granular sludge method has not been utilized at a large scale in actual sewage treatment. It is impossible to culture and maintain aerobic granular sludge in a sewage station that contains sewage difficult to be degraded and cannot strictly control the reaction conditions. It is imperative to develop an aerobic granular sludge operation process and device that can be extensively managed, continuously operated, and widely applied to wastewater in various kinds of industries.

CN 106 045 021 A, US 2005/000873 A1, and US 4 211 657 A each describe a combination of a device for air stripping reflux and sedimentation and a biochemical pool as described in the preamble of claim 1. GB 2 110 658 A discloses an apparatus for biological cleaning of waste water containing carbonates and nitrates by means of anaerobic denitrification, aerobic activation and nitrification by means of uniform activated sludge.

### SUMMARY OF THE INVENTION

An objective of the invention is to provide a device that combines air stripping reflux and sedimentation, and a method that utilizes the device for air stripping reflux and sedimentation to perform air stripping reflux, mud-water separation and sedimentation, and culturing aerobic granular sludge.

The present invention is directed to a combination of a device for air stripping reflux and sedimentation and a biochemical pool as defined in claim 1. The invention is further directed to a method as defined in claim 6.

In view of the foregoing, the disclosed device for air stripping reflux and sedimentation is disposed in a biochemical pool. The device for air stripping reflux and sedimentation includes an upflow outer tank, a reflux inner tank, an air shield inner sleeve, a conic sludge dipper, a reflux pipe, and a water discharge cofferdam. The bottom opening of the upflow outer tank is disposed in the biochemical pool. The reflux inner tank is embedded in the upflow outer tank, the air shield inner sleeve is embedded in the reflux inner tank, and the water discharge cofferdam is horizontally disposed in the air shield inner sleeve. The top large opening of the conic sludge dipper is connected with the bottom of the reflux inner tank. The bottom opening of the conic sludge dipper is connected with the top of the reflux pipe. The bottom of the biochemical pool is provided with an external aeration device.

According to the invention an internal aeration device is disposed in the upflow external tank and is embedded under the conic sludge dipper.

The reflux pipe is a straight pipe whose top end is connected with the bottom opening of the conic sludge dipper. The bottom opening of the straight pipe is provided with a coaxial conic air shield cavity.

The conic air shield cavity has the shape of upper and lower cones connected symmetrically.

According to an aspect different from the claimed invention, the reflux pipe is an L-shaped pipe whose one opening end is connected to the bottom opening of the conic sludge dipper and whose other opening end extends to one side at the bottom of the biochemical pool.

In an embodiment of the invention, the upflow outer tank, the reflux inner tank, and the air shield inner sleeve have a rectangular or cylindrical shape.

In this embodiment, the conic sludge dipper and the reflux inner tank have a matched circular or rectangular cone shape.

In an embodiment of the invention, the biochemical pool is provided with at least one device for air stripping reflux and sedimentation.

In this embodiment, a device for collecting and removing dross is disposed between the upflow outer tank and the reflux inner tank.

The disclosed method of utilizing the device for air stripping reflux and sedimentation includes the following steps:
a. Injecting sewage into the biochemical pool, with the water level of the sewage being higher than the top end of the reflux inner tank and lower than the top ends of both the upflow outer tank and the air shield inner sleeve;
b. Activating the external aeration device disposed at the bottom of the biochemical pool, with the external aeration device aerating and oxygenating the sewage and providing a lifting force, so that the sewage sludge is stripped between the upflow outer tank and the reflux inner tank, forming a rising region, and the water level between the upflow outer tank and the reflux inner tank is higher than the water level between the reflux inner tank and the air shield inner sleeve;
c. Stripping air bubbles off the sewage at the top end of the rising region between the upflow outer tank and the reflux inner tank in step b, while the sewage flows at the same time from the higher water level between the upflow outer tank and the reflux inner tank to the lower water level between the reflux inner tank and the air shield inner sleeve;
d. Raising the water level between the reflux inner tank and the air shield inner sleeve in step c to go higher than the water level of the biochemical pool, so that a downflow reflux region is formed between the reflux inner tank and the air shield inner sleeve;
e. Combining the air shield inner sleeve, the conic sludge dipper and the water discharge cofferdam to form a sedimentation tank to separate the sewage sediments in the reflux region in step d, wherein the sewage with sludge returns to the bottom of the biochemical pool via the reflux pipe at the bottom of the conic sludge dipper, with the separated clean liquid being continuously discharged via the water discharge cofferdam in the air shield inner sleeve; and
f. Sending the sewage sludge returned to the bottom of the biochemical pool to the rising region between the upflow outer tank and the reflux inner tank under the action of the external aeration device, thereby forming a large-scale circulation of sewage going from the bottom of the biochemical pool to the rising region and the reflux region to the conic sludge dipper and the reflux pipe to the bottom of the biochemical pool, featuring an axial circulation flow.

In comparison with the prior art, the invention utilizes the device for air stripping reflux and sedimentation on the basis of a biochemical aeration pool to simultaneously perform separation and sedimentation for sludge and form a large-scale air stripping reflux. The air shield inner sleeve, the conic sludge dipper, and the water discharge cofferdam constitute a structure with the function of sedimentation for separating and precipitating sludge. Besides, the internal aeration device and the external aeration device provide the power for air stripping while aerating the sludge. The device achieves a large-scale circulation without employing a circulation pump. Moreover, the fact that the sludge flows at a large scale in the axial direction of the device has a sufficient hydraulic shearing force. An eddy current forms during the process and increases the collision probability of the sludge. This creates a desirable operating condition for forming granular sludge in the continuous flow device.

### BRIEF DESCRIPTION OF THE DRAWINGS

FIG. 1 is a schematic view of the disclosed device for air stripping reflux and sedimentation in a biochemical pool;
FIG. 2 is a schematic view of the disclosed device for air stripping reflux and sedimentation;
FIG. 3 is a schematic view of an optimized device for air stripping reflux and sedimentation in a biochemical pool;
FIG. 4 is a top view of the disclosed device for air stripping reflux and sedimentation;
FIG. 5 is a top view of two of the disclosed devices for air stripping reflux and sedimentation operating in parallel;
FIG. 6 is a schematic view of another device for air stripping reflux and sedimentation;
FIG. 7 is a top view of another device for air stripping reflux and sedimentation;
FIG. 8 is a schematic view of another optimized device for air stripping reflux and sedimentation; and
FIG. 9 is a top view of another optimized device for air stripping reflux and sedimentation.

### DESCRIPTION OF THE PREFERRED EMBODIMENTS

The aforementioned and other objectives and advantages of this disclosure will become clearer in light of the following detailed description of an illustrative embodiment of this invention described in connection with the drawings.

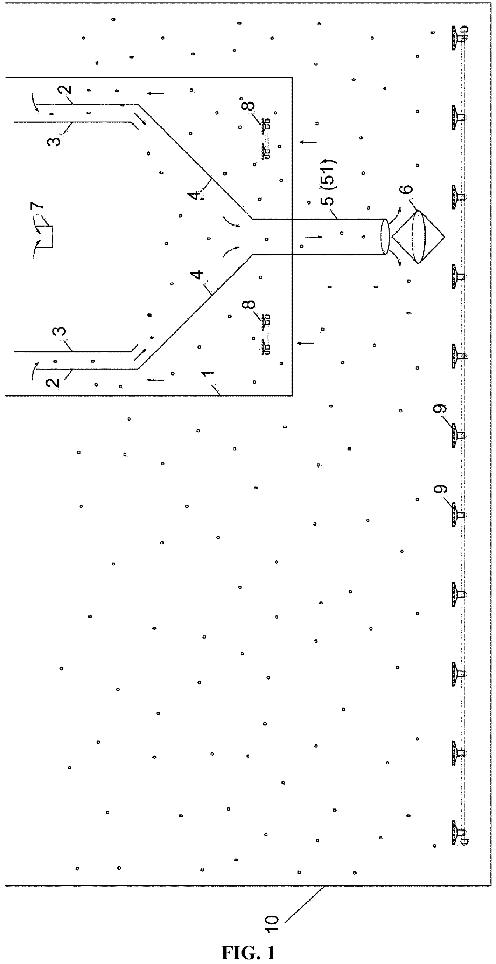

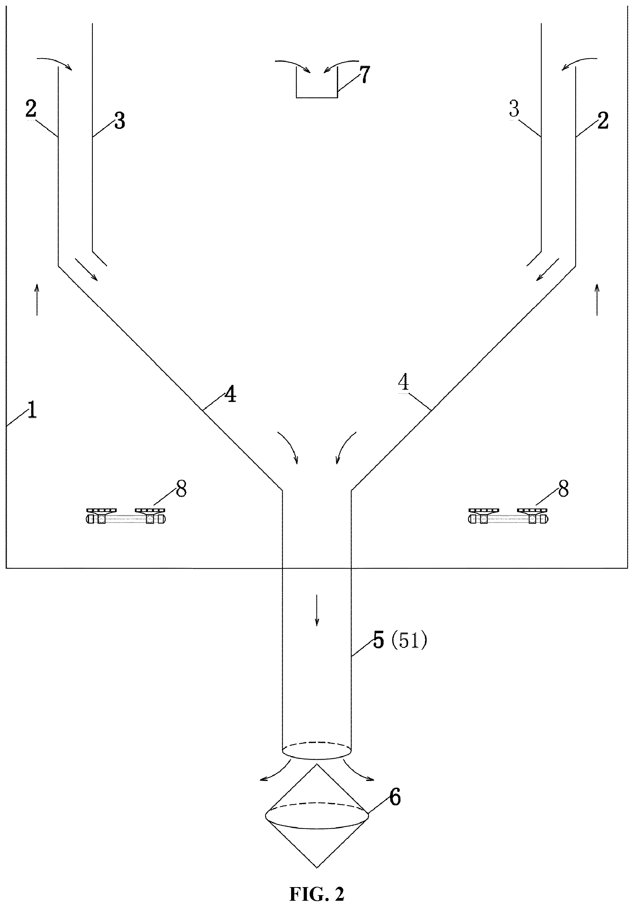

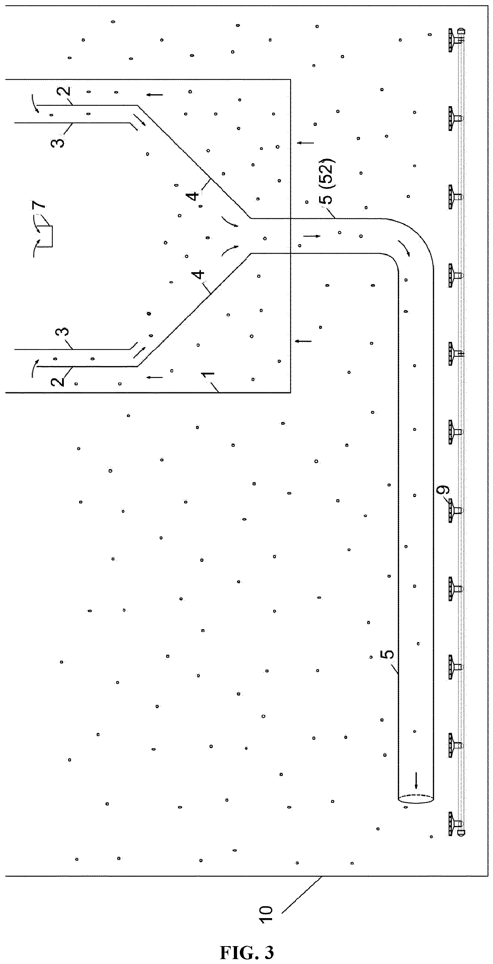

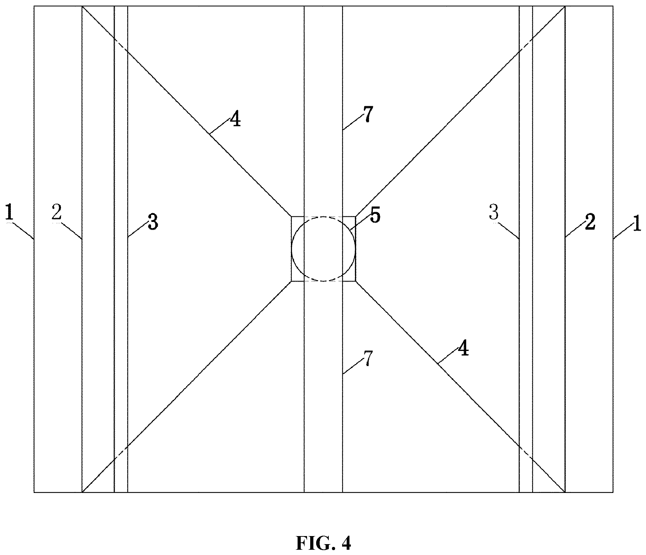

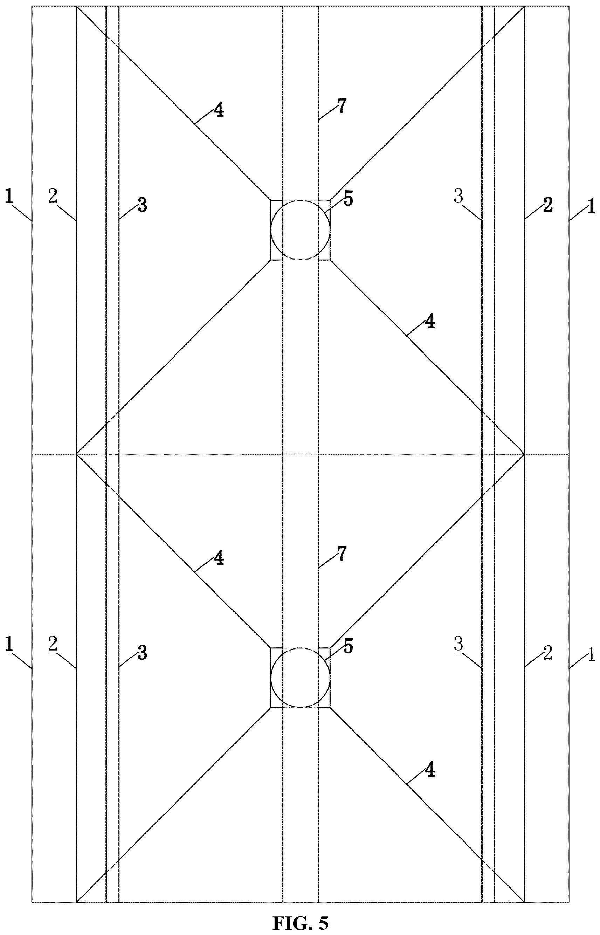

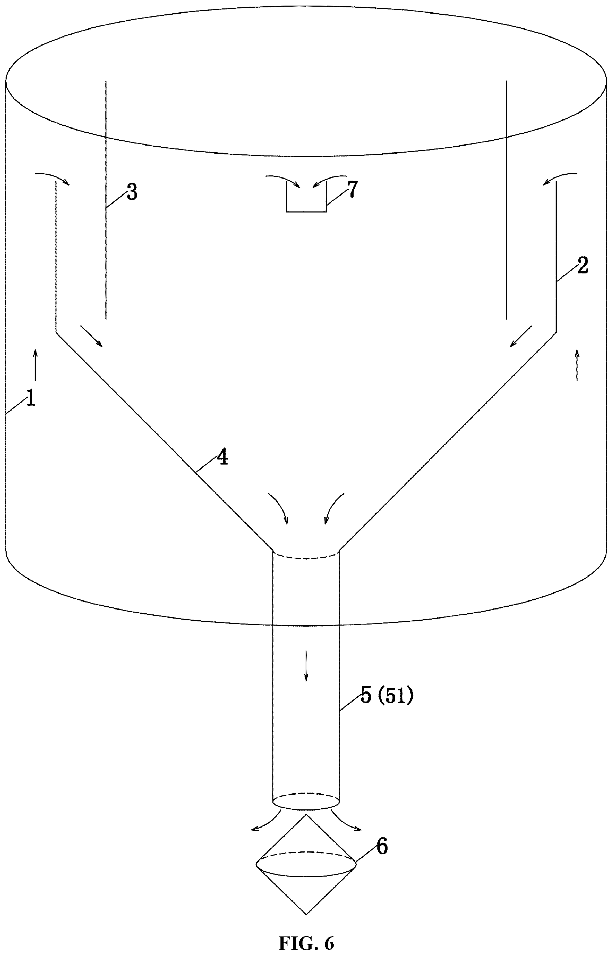

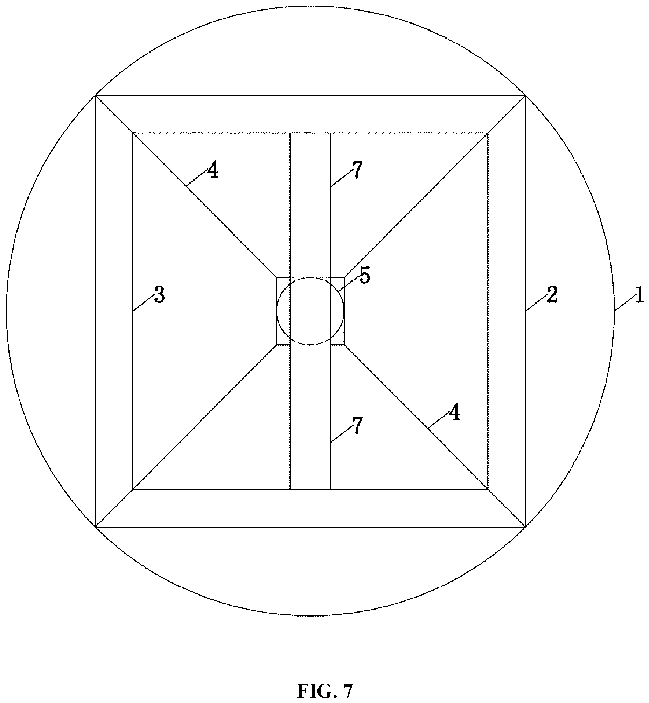

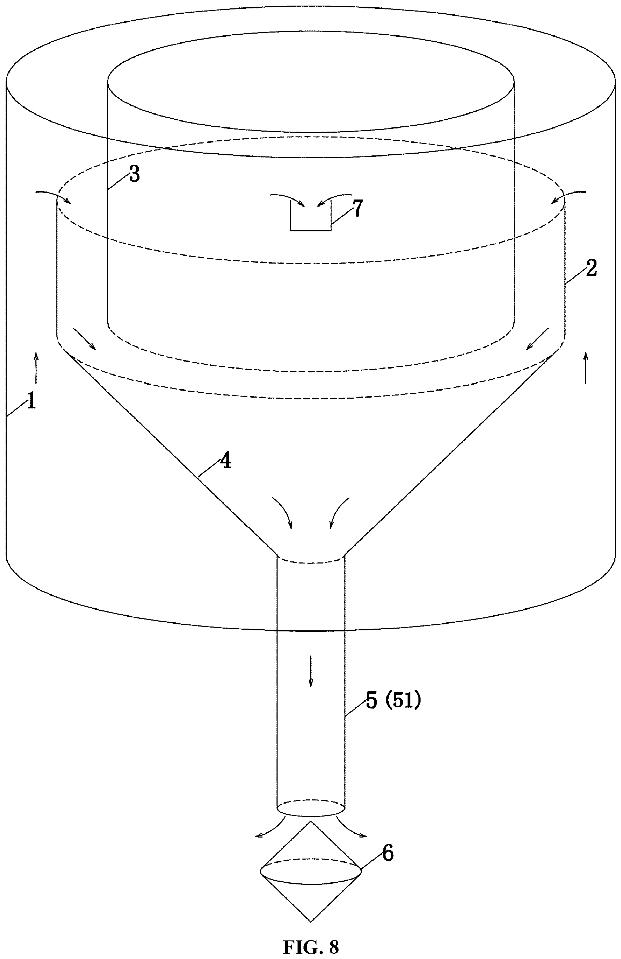

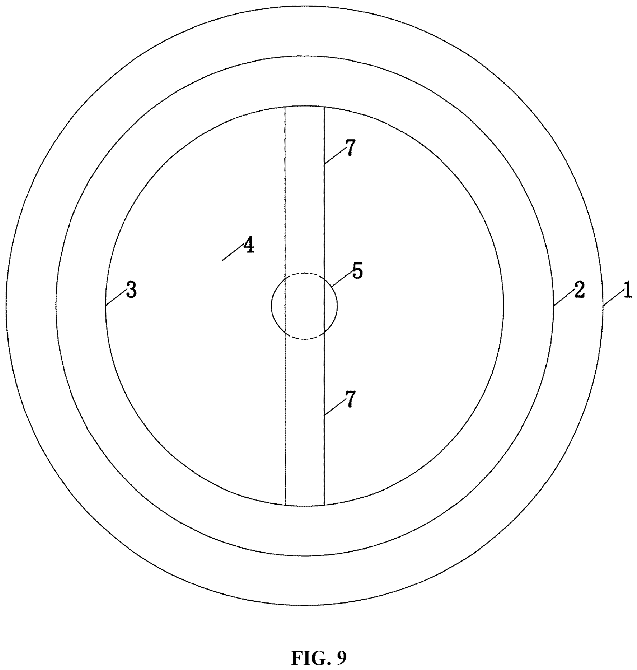

FIG. 1 is a schematic view of the disclosed device for air stripping reflux and sedimentation in a biochemical pool. It shows the structure of the disclosed device for air stripping reflux and sedimentation and how it is disposed in the biochemical pool 10. FIG. 2 is a schematic view of the disclosed device for air stripping reflux and sedimentation. It shows that the device for air stripping reflux and sedimentation includes an upflow outer tank 1, a reflux inner tank 2, an air shield inner sleeve 3, a conic sludge dipper 4, a reflux pipe 5, and a water discharge cofferdam 7 and shows the structure thereof. In particular, the reflux pipe 5 is a straight pipe 51, and a conic air shield cavity 6 is formed therebelow. FIG. 3 is a schematic view of an optimized device for air stripping reflux and sedimentation in a biochemical pool. It shows that the reflux pipe 5 is an L-shaped pipe 52. FIG. 4 is a top view of the disclosed device for air stripping reflux and sedimentation. FIG. 5 is a top view of two of the disclosed devices for air stripping reflux and sedimentation operating in parallel. It shows that the upflow outer tank 1, the reflux inner tank 2, and the air shield inner sleeve 3 are all coaxial rectangular tanks. FIG. 6 is a schematic view of another device for air stripping reflux and sedimentation. FIG. 7 is a top view of another device for air stripping reflux and sedimentation. It shows that the upflow outer tank 1 is cylindrical, while the reflux inner tank 2 and the air shield inner sleeve 3 are both rectangular. FIG. 8 is a schematic view of another optimized device for air stripping reflux and sedimentation. FIG. 9 is a top view of another optimized device for air stripping reflux and sedimentation. It shows that the upflow outer tank 1, the reflux inner tank 2, and the air shield inner sleeve 3 are all cylindrical.

The structure of the disclosed device for air stripping reflux and sedimentation is depicted in FIGS. 1, 2, and 3. The device is disposed in a biochemical pool 10, and includes an upflow outer tank 1, a reflux inner tank 2, an air shield inner sleeve 3, a conic sludge dipper 4, a reflux pipe 5, and a water discharge cofferdam 7. The bottom opening of the upflow outer tank 1 is disposed in the biochemical pool 10. The reflux inner tank 2 is embedded in the upflow outer tank 1, the air shield inner sleeve 3 is embedded in the reflux inner tank 2, and the water discharge cofferdam 7 is horizontally disposed in the air shield inner sleeve 3. The top large opening of the conic sludge dipper 4 is connected with the bottom of the reflux inner tank 2. The bottom opening of the conic sludge dipper 4 is connected with the top of the reflux pipe 5. The bottom of the biochemical pool 10 is provided with an external aeration device 9. The invention utilizes the aeration device to provide an uplifting force for the circulation, rendering a rising region between the upflow out tank and the reflux inner tank, so that a downward reflux region is formed between the reflux inner tank and the air shield inner sleeve. With the help of the conic sludge dipper and the reflux pipe, a large-scale axial circulation is achieved. Moreover, the air shield inner sleeve, the conic sludge dipper and the water discharge cofferdam constitute a structure of sedimentation pool. Therefore, the invention has the device of air stripping reflux and sedimentation on the basis of a biochemical aeration pool. At the same time of separating and precipitating the sludge, a large-scale air stripping flux is also undergoing, effectively reducing the area required for processing wastewater. The invention also avoids the power consumption and maintenance of the scrapper and the reflux pump. When the biochemical pool 10 is fully filled with sludge, the water level of the wastewater is lower than the top of both the upflow outer tank 1 and the air shield inner sleeve 3 and higher than the top of the reflux inner tank 2.

As shown in FIGS. 1, 2 and 3, the upflow out tank 1 is provided with an internal aeration device 8 embedded underneath the conic sludge dipper 4 to enhance the air stripping power.

As shown in FIGS. 1 and 2, the reflux pipe 5 in this embodiment is a straight pipe 51 whose top end is connected with the bottom opening of the conic sludge dipper 4. The bottom opening of the straight pipe 51 is provided with a coaxial conic air shield cavity 6 for blocking the bubbles generated by the external aeration device 9, thereby not disturbing the separation of mud and water inside the conic sludge dipper 4. Such bubbles are prevented from passing through the reflux pipe 5 and entering the air stripping reflux circulation and affecting sludge sedimentation.

As shown in FIG. 2, the conic air shield cavity 6 in this embodiment has the shape of upper and lower cones connected symmetrically. The diameter of the largest cross section of the conic air shield cavity 6 is greater than the outer diameter of the straight pipe 51. The upper cone of the the conic air shield cavity 6 guides the reflux sludge at the reflux pipe 5 to spread over the bottom of the biochemical pool 10. The lower cone of the conic air shield cavity 6 also guides the bubbles generated by the external aeration device 9 toward the lower opening of the straight pipe 5, thereby effectively preventing the bubbles from entering the straight pipe 51.

As shown in FIG. 3, the reflux pipe 5 in this variation according to an aspect different from the claimed invention is an L-shaped pipe 52 whose one opening end is connected with the bottom opening of the conic sludge dipper 4 and whose other opening end extends sideways at the bottom of the biochemical pool 10. The purpose of adopting the above-mentioned structure for the reflux pipe 5 is to prevent bubbles generated by the external aeration device 9 from entering the reflux pipe 5.

In this variation, all the upflow outer tank 1, the reflux inner tank 2 and the air shield inner sleeve 3 have the shape of rectangle or cylinder. As shown in FIGS. 2, 4 and 5, the upflow outer tank 1, the reflux inner tank 2 and the air shield inner sleeve 3 are all coaxial rectangular. In FIGS. 6 and 7, the upflow outer tank 1 is cylindrical, while both the reflux inner tank 2 and the air shield inner sleeve 3 are rectangular. In FIGS. 8 and 9, all the upflow outer tank 1, the reflux inner tank 2 and the air shield inner sleeve 3 are cylindrical.

As shown in FIGS. 2, 4, 5, 6, 7, 8 and 9, the conic sludge dipper 4 has the shape of a circular or rectangular cone that matches with the reflux inner tank 2. In particular, the connection between the reflux inner tank 2 and the conic sludge dipper 4 is integrally formed. Moreover, the connection between the reflux pipe 5 and the conic sludge dipper 4 is also integrally formed.

In this embodiment, the biochemical pool 10 is disposed with at least one device for air stripping reflux and sedimentation therein. In FIG. 5, the biochemical pool 10 is disposed with two or more devices for air stripping reflux and sedimentation to increase the efficiency of air stripping reflux and sludge sedimentation and separation.

In an embodiment of the invention, a device for collecting and removing dross is disposed between the upflow outer tank 1 and the reflux inner tank 2, thereby removing the dross.

The disclosed method of utilizing the device for air stripping reflux and sedimentation includes the following steps:
a. Injecting sewage into the biochemical pool 10, with the water level of the sewage being higher than the top end of the reflux inner tank 2 and lower than the top ends of both the upflow outer tank 1 and the air shield inner sleeve 3;
b. Activating the external aeration device 9 disposed at the bottom of the biochemical pool, with the external aeration device 9 aerating and oxygenating the sewage and providing a lifting force, so that the sewage sludge is stripped between the upflow outer tank 1 and the reflux inner tank 2, forming a rising region, and the water level between the upflow outer tank 1 and the reflux inner tank 2 is higher than the water level between the reflux inner tank 2 and the air shield inner sleeve 3;
c. Stripping air bubbles off the sewage at the top end of the rising region between the upflow outer tank 1 and the reflux inner tank 2 in step b, while the sewage flows at the same time from the higher water level between the upflow outer tank 1 and the reflux inner tank 2 to the lower water level between the reflux inner tank 2 and the air shield inner sleeve 3;
d. Raising the water level between the reflux inner tank 2 and the air shield inner sleeve 3 in step c to go higher than the water level of the biochemical pool 10, so that a downflow reflux region is formed between the reflux inner tank 2 and the air shield inner sleeve 3;
e. Combining the air shield inner sleeve 3, the conic sludge dipper 4 and the water discharge cofferdam 7 to form a sedimentation tank to separate the sewage sediments in the reflux region in step d, wherein the sewage with sludge returns to the bottom of the biochemical pool 10 via the reflux pipe 5 at the bottom of the conic sludge dipper 4, with the separated clean liquid being continuously discharged via the water discharge cofferdam 7 in the air shield inner sleeve 3; and
f. Sending the sewage sludge returned to the bottom of the biochemical pool 10 to the rising region between the upflow outer tank 1 and the reflux inner tank 2 under the action of the external aeration device 9, thereby forming a large-scale circulation of sewage going from the bottom of the biochemical pool 10 to the rising region and the reflux region to the conic sludge dipper 4 and the reflux pipe 5 to the bottom of the biochemical pool 10, featuring an axial circulation flow.

The disclosed device has a sufficient hydraulic shearing force to facilitate the formation of granular sludge. The complete reflux from the bottom of the biochemical pool 10 to the rising region results in a large-scale circulation and axial flow. An eddy current forms during the process and increases the collision probability of the sludge.

## Claims

1. A combination of a device for air stripping reflux and sedimentation and a biochemical pool (10), the device being disposed in the biochemical pool (10), the device comprising: an upflow outer tank (1), a reflux inner tank (2), an air shield inner sleeve (3), a conic sludge dipper (4), a reflux pipe (5) and a water discharge cofferdam (7), wherein the bottom opening of the upflow outer tank (1) is disposed in the biochemical pool (10); the reflux inner tank (2) is embedded in the upflow outer tank (1), the air shield inner sleeve (3) is embedded in the reflux inner tank (2), and the water discharge cofferdam (7) is horizontally disposed in the air shield inner sleeve (3); the top opening of the conic sludge dipper (4) is connected with the bottom of the reflux inner tank (2), and the bottom opening of the conic sludge dipper (4) is connected with the top end of the reflux pipe (5); and the bottom of the biochemical pool (10) is provided with an external aeration device (9);
**characterised in that** the reflux pipe (5) is a straight pipe (51) whose top end is connected with the bottom opening of the conic sludge dipper (4) and whose bottom end is provided with a coaxial conic air shield cavity (6); wherein the conic air shield cavity (6) has a shape of upper and lower circular cones connected symmetrically, and a diameter of the largest cross section of the conic air shield cavity (6) is greater than an outer diameter of the straight pipe (51),
wherein the upflow outer tank (1) is provided with an internal aeration device (8) therein, and the internal aeration device (8) is connected underneath the conic sludge dipper (4), and wherein the internal aeration device (8) and the external aeration device (9) are configured to provide the power for air stripping while aerating the sludge;
wherein the combination is configured to:
a. inject sewage into the biochemical pool (10), with the water level of the sewage being higher than the top end of the reflux inner tank (2) and lower than the top ends of both the upflow outer tank (1) and the air shield inner sleeve (3);
b. activate the external aeration device (9) disposed at the bottom of the biochemical pool, with the external aeration device (9) being configured to aerate and oxygenate the sewage and provide a lifting force, so that the sewage sludge is stripped between the upflow outer tank (1) and the reflux inner tank (2), forming a rising region, and the water level between the upflow outer tank (1) and the reflux inner tank (2) is higher than the water level between the reflux inner tank (2) and the air shield inner sleeve (3);
c. strip air bubbles off the sewage at the top end of the rising region between the upflow outer tank (1) and the reflux inner tank (2) in step b, while the sewage flows at the same time from the higher water level between the upflow outer tank (1) and the reflux inner tank (2) to the lower water level between the reflux inner tank (2) and the air shield inner sleeve (3);
d. raise the water level between the reflux inner tank (2) and the air shield inner sleeve (3) in step c to go higher than the water level of the biochemical pool (10), so that a downflow reflux region is formed between the reflux inner tank (2) and the air shield inner sleeve (3);
e. separate, by the combination of the inner sleeve (3), the conic sludge dipper (4) and the water discharge cofferdam (7) acting as a sedimentation tank, the sewage sediments in the reflux region in step d, wherein the sewage with sludge returns to the bottom of the biochemical pool (10) via the reflux pipe (5) at the bottom of the conic sludge dipper (4), with the separated clean liquid being continuously discharged via the water discharge cofferdam (7) in the air shield inner sleeve (3); and
f. send the sewage sludge returned to the bottom of the biochemical pool (10) to the rising region between the upflow outer tank (1) and the reflux inner tank (2) under the action of the external aeration device (9), thereby forming a large-scale circulation of sewage going from the bottom of the biochemical pool (10) to the rising region and the reflux region to the conic sludge dipper (4) and the reflux pipe (5) to the bottom of the biochemical pool (10), featuring a large-scale circulation and flow in an axial direction of the device.

2. The combination of claim 1, wherein all of the upflow outer tank (1), the reflux inner tank (2) and the air shield inner sleeve (3) have a shape selected from the group consisting of coaxial rectangular tank and cylinder.

3. The combination of claim 2, wherein the conic sludge dipper (4) has the shape of a circular or rectangular cone that matches with the reflux inner tank (2).

4. The combination of claim 1, wherein the biochemical pool (10) is disposed with at least one of the device for air stripping reflux and sedimentation.

5. The combination of claim 1, wherein a device for collecting and removing dross is disposed between the upflow outer tank (1) and the reflux inner tank (2).

6. A method of utilizing the combination of claim 1, comprising the steps of:
a. injecting sewage into the biochemical pool (10), with the water level of the sewage being higher than the top end of the reflux inner tank (2) and lower than the top ends of both the upflow outer tank (1) and the air shield inner sleeve (3);
b. activating the external aeration device (9) disposed at the bottom of the biochemical pool and , with the external aeration device (9) aerating and oxygenating the sewage and providing a lifting force, so that the sewage sludge is stripped between the upflow outer tank (1) and the reflux inner tank (2), forming a rising region, and the water level between the upflow outer tank (1) and the reflux inner tank (2) is higher than the water level between the reflux inner tank (2) and the air shield inner sleeve (3);
c. stripping air bubbles off the sewage at the top end of the rising region between the upflow outer tank (1) and the reflux inner tank (2) in step b, while the sewage flows at the same time from the higher water level between the upflow outer tank (1) and the reflux inner tank (2) to the lower water level between the reflux inner tank (2) and the air shield inner sleeve (3);
d. raising the water level between the reflux inner tank (2) and the air shield inner sleeve (3) in step c to go higher than the water level of the biochemical pool (10), so that a downflow reflux region is formed between the reflux inner tank (2) and the air shield inner sleeve (3);
e. separating, by the combination of the inner sleeve (3), the conic sludge dipper (4) and the water discharge cofferdam (7) acting as a sedimentation tank the sewage sediments in the reflux region in step d, wherein the sewage with sludge returns to the bottom of the biochemical pool (10) via the reflux pipe (5) at the bottom of the conic sludge dipper (4), with the separated clean liquid being continuously discharged via the water discharge cofferdam (7) in the air shield inner sleeve (3); and
f. sending the sewage sludge returned to the bottom of the biochemical pool (10) to the rising region between the upflow outer tank (1) and the reflux inner tank (2) under the action of the external aeration device (9), thereby forming a large-scale circulation of sewage going from the bottom of the biochemical pool (10) to the rising region and the reflux region to the conic sludge dipper (4) and the reflux pipe (5) to the bottom of the biochemical pool (10), featuring a large-scale circulation and flow in an axial direction of the device.

## Patentansprüche

1. Kombination einer Vorrichtung für Rückfluss und Sedimentation mit Luftstripping und eines biochemischen Beckens (10), wobei die Vorrichtung im biochemischen Becken (10) angeordnet ist, wobei die Vorrichtung umfasst: einen Aufstromaußentank (1), einen Rückflussinnentank (2), eine Luftabschirmungsinnenhülse (3), einen konischen Schlammschöpfer (4), ein Rückflussrohr (5) und einen Wasserauslassfangedamm (7), wobei die untere Öffnung des Aufstromaußentanks (1) im biochemischen Becken (10) angeordnet ist; der Rückflussinnentank (2) in den Aufstromaußentank (1) eingebettet ist, die Luftabschirmungsinnenhülse (3) in den Rückflussinnentank (2) eingebettet ist und der Wasserauslassfangedamm (7) horizontal in der Luftabschirmungsinnenhülse (3) angeordnet ist; wobei die obere Öffnung des konischen Schlammschöpfers (4) mit dem Boden des Rückflussinnentanks (2) verbunden ist und die untere Öffnung des konischen Schlammschöpfers (4) mit dem oberen Ende des Rückflussrohrs (5) verbunden ist; und der Boden des biochemischen Beckens (10) mit einer externen Belüftungsvorrichtung (9) versehen ist;
**dadurch gekennzeichnet, dass** das Rückflussrohr (5) ein gerades Rohr (51) ist, dessen oberes Ende mit der unteren Öffnung des konischen Schlammschöpfers (4) verbunden ist, und dessen unteres Ende mit einem koaxialen konischen Luftabschirmungshohlraum (6) versehen ist; wobei der konische Luftabschirmungshohlraum (6) eine Form von oberen und unteren kreisförmigen Kegeln aufweist, die symmetrisch verbunden sind, und ein Durchmesser des größten Querschnitts des konischen Luftabschirmungshohlraums (6) größer ist als ein Außendurchmesser des geraden Rohrs (51),
wobei der Aufstromaußentank (1) mit einer internen Belüftungsvorrichtung (8) darin versehen ist und die interne Belüftungsvorrichtung (8) unterhalb des konischen Schlammschöpfers (4) verbunden ist, und wobei die interne Belüftungsvorrichtung (8) und die externe Belüftungsvorrichtung (9) dazu eingerichtet sind, die Leistung für das Luftstripping bereitzustellen, während der Schlamm belüftet wird,
wobei die Kombination dazu eingerichtet ist:
a. Abwasser in das biochemische Becken (10) einzuleiten, wobei der Wasserpegel des Abwassers höher als das obere Ende des Rückflussinnentanks (2) und niedriger als die oberen Enden sowohl des Aufstromaußentanks (1) als auch der Luftabschirmungsinnenhülse (3) ist;
b. die externe Belüftungsvorrichtung (9) zu aktivieren, die am Boden des biochemischen Beckens angeordnet ist, wobei die externe Belüftungsvorrichtung (9) dazu eingerichtet ist, das Abwasser zu belüften und mit Sauerstoff anzureichern und eine Hubkraft bereitzustellen, so dass der Abwasserschlamm zwischen dem Aufstromaußentank (1) und dem Rückflussinnentank (2) gestrippt wird, was einen Anstiegsbereich bildet, und der Wasserpegel zwischen dem Aufstromaußentank (1) und dem Rückflussinnentank (2) höher ist als der Wasserpegel zwischen dem Rückflussinnentank (2) und der Luftabschirmungsinnenhülse (3);
c. Luftblasen von dem Abwasser am oberen Ende des Anstiegsbereichs zwischen dem Aufstromaußentank (1) und dem Rückflussinnentank (2) in Schritt b abzustrippen, während das Abwasser gleichzeitig vom höheren Wasserpegel zwischen dem Aufstromaußentank (1) und dem Rückflussinnentank (2) zum niedrigeren Wasserpegel zwischen dem Rückflussinnentank (2) und der Luftabschirmungsinnenhülse (3) strömt;
d. den Wasserpegel zwischen dem Rückflussinnentank (2) und der Luftabschirmungsinnenhülse (3) in Schritt c anzuheben, so dass er höher geht als der Wasserpegel des biochemischen Beckens (10), so dass ein Abstromrückflussbereich zwischen dem Rückflussinnentank (2) und der Luftabschirmungsinnenhülse (3) gebildet wird;
e. durch die Kombination der Innenhülse (3), des konischen Schlammschöpfers (4) und des Wasserauslassfangedamms (7), der als Sedimentationstank wirkt, die Abwassersedimente im Rückflussbereich in Schritt d zu trennen, wobei das Abwasser mit Schlamm zum Boden des biochemischen Beckens (10) über das Rückflussrohr (5) an der Unterseite des konischen Schlammschöpfers (4) zurückkehrt, wobei die abgetrennte saubere Flüssigkeit kontinuierlich über den Wasserauslassfangedamm (7) in der Luftabschirmungsinnenhülse (3) ausgelassen wird; und
f. den zum Boden des biochemischen Beckens (10) zurückgekehrten Abwasserschlamm zum Anstiegsbereich zwischen dem Aufstromaußentank (1) und dem Rückflussinnentank (2) unter der Wirkung der externen Belüftungsvorrichtung (9) zu schicken, wodurch eine umfangreiche Zirkulation von Abwasser gebildet wird, die vom Boden des biochemischen Beckens (10) zum Anstiegsbereich und Rückflussbereich zum konischen Schlammschöpfer (4) und Rückflussrohr (5) zum Boden des biochemischen Beckens (10) verläuft, was sich durch eine umfangreiche Zirkulation und Strömung in einer axialen Richtung der Vorrichtung auszeichnet.

2. Kombination nach Anspruch 1, wobei alle des Aufstromaußentanks (1), des Rückflussinnentanks (2) und der Luftabschirmungsinnenhülse (3) eine Form aufweisen, die aus der Gruppe ausgewählt ist, die aus einem koaxialen rechteckigen Tank und einem Zylinder besteht.

3. Kombination nach Anspruch 2, wobei der konische Schlammschöpfer (4) die Form eines kreisförmigen oder rechteckigen Kegels aufweist, die dem Rückflussinnentank (2) entspricht.

4. Kombination nach Anspruch 1, wobei das biochemische Becken (10) mit mindestens einer der Vorrichtung für Rückfluss und Sedimentation mit Luftstripping angeordnet ist.

5. Kombination nach Anspruch 1, wobei eine Vorrichtung zum Sammeln und Entfernen von Schlacke zwischen dem Aufstromaußentank (1) und dem Rückflussinnentank (2) angeordnet ist.

6. Verfahren zur Verwendung der Kombination nach Anspruch 1 mit den Schritten:
a. Einleiten von Abwasser in das biochemische Becken (10), wobei der Wasserpegel des Abwassers höher als das obere Ende des Rückflussinnentanks (2) und niedriger als die oberen Enden sowohl des Aufstromaußentanks (1) als auch der Luftabschirmungsinnenhülse (3) ist;
b. Aktivieren der externen Belüftungsvorrichtung (9), die am Boden des biochemischen Beckens angeordnet ist, und wobei die externe Belüftungsvorrichtung (9) das Abwasser belüftet und mit Sauerstoff anreichert und eine Hubkraft bereitstellt, so dass der Abwasserschlamm zwischen dem Aufstromaußentank (1) und dem Rückflussinnentank (2) gestrippt wird, was einen Anstiegsbereich bildet, und der Wasserpegel zwischen dem Aufstromaußentank (1) und dem Rückflussinnentank (2) höher ist als der Wasserpegel zwischen dem Rückflussinnentank (2) und der Luftabschirmungsinnenhülse (3);
c. Abstrippen von Luftblasen von dem Abwasser am oberen Ende des Anstiegsbereichs zwischen dem Aufstromaußentank (1) und dem Rückflussinnentank (2) in Schritt b, während das Abwasser gleichzeitig vom höheren Wasserpegel zwischen dem Aufstromaußentank (1) und dem Rückflussinnentank (2) zum niedrigeren Wasserpegel zwischen dem Rückflussinnentank (2) und der Luftabschirmungsinnenhülse (3) strömt;
d. Anheben des Wasserpegels zwischen dem Rückflussinnentank (2) und der Luftabschirmungsinnenhülse (3) in Schritt c, so dass er höher geht als der Wasserpegel des biochemischen Beckens (10), so dass ein Abstromrückflussbereich zwischen dem Rückflussinnentank (2) und der Luftabschirmungsinnenhülse (3) gebildet wird;
e. Trennen der Abwassersedimente im Rückflussbereich in Schritt d durch die Kombination der Innenhülse (3), des konischen Schlammschöpfers (4) und des Wasserauslassfangedamms (7), der als Sedimentationstank wirkt, wobei das Abwasser mit Schlamm zum Boden des biochemischen Beckens (10) über das Rückflussrohr (5) an der Unterseite des konischen Schlammschöpfers (4) zurückkehrt, wobei die abgetrennte saubere Flüssigkeit kontinuierlich über den Wasserauslassfangedamm (7) in der Luftabschirmungsinnenhülse (3) ausgelassen wird; und
f. Schicken des zum Boden des biochemischen Beckens (10) zurückgekehrten Abwasserschlamms zum Anstiegsbereich zwischen dem Aufstromaußentank (1) und dem Rückflussinnentank (2) unter der Wirkung der externen Belüftungsvorrichtung (9), wodurch eine umfangreiche Zirkulation von Abwasser gebildet wird, die vom Boden des biochemischen Beckens (10) zum Anstiegsbereich und Rückflussbereich zum konischen Schlammschöpfer (4) und Rückflussrohr (5) zum Boden des biochemischen Beckens (10) verläuft, was sich durch eine umfangreiche Zirkulation und Strömung in einer axialen Richtung der Vorrichtung auszeichnet.

## Revendications

1. Combinaison d'un dispositif de reflux de strippage à l'air et de sédimentation et d'un bassin biochimique (10), le dispositif étant disposé dans le bassin biochimique (10), le dispositif comportant : un réservoir extérieur à flux ascendant (1), un réservoir intérieur de reflux (2), une chemise intérieure d'écran d'air (3), un élément conique d'immersion de boues (4), un tuyau de reflux (5) et un batardeau d'évacuation d'eau (7), l'ouverture inférieure du réservoir extérieur à flux ascendant (1) étant disposée dans le bassin biochimique (10) ; le réservoir intérieur de reflux (2) est incorporé dans le réservoir extérieur à flux ascendant (1), la chemise intérieure d'écran d'air (3) est incorporée dans le réservoir intérieur de reflux (2) et le batardeau d'évacuation d'eau (7) est disposé horizontalement dans la chemise intérieure d'écran d'air (3) ; l'ouverture supérieure de l'élément conique d'immersion de boues (4) est reliée au fond du réservoir intérieur à reflux (2), et l'ouverture inférieure de l'élément conique d'immersion de boues (4) est reliée à l'extrémité supérieure du tuyau de reflux (5), et le fond du bassin biochimique (10) est pourvu d'un dispositif d'aération externe (9) ;
**caractérisée en ce que** le tuyau de reflux (5) est un tuyau droit (51) dont l'extrémité supérieure est reliée à l'ouverture inférieure de l'élément conique d'immersion de boues (4) et dont l'extrémité inférieure est pourvue d'une cavité d'écran d'air conique coaxiale (6) ; la cavité d'écran d'air conique (6) ayant une forme de cônes circulaires supérieur et inférieur reliés symétriquement, et un diamètre de la plus grande section transversale de la cavité d'écran d'air conique (6) est supérieur à un diamètre extérieur du tuyau droit (51),
le réservoir extérieur à flux ascendant (1) étant pourvu d'un dispositif d'aération interne (8) dans celui-ci et le dispositif d'aération interne (8) étant raccordé en dessous de l'élément conique d'immersion de boues (4), et le dispositif d'aération interne (8) et le dispositif d'aération externe (9) étant configurés pour fournir la puissance pour un strippage à l'air tout en aérant les boues ;
la combinaison étant configurée pour :
a. injecter des eaux usées dans le bassin biochimique (10), le niveau d'eau des eaux usées étant plus haut que l'extrémité supérieure du réservoir intérieur de reflux (2) et plus bas que les extrémités supérieures à la fois du réservoir extérieur à flux ascendant (1) et de la chemise intérieure d'écran d'air (3),
b. activer le dispositif d'aération externe (9) disposé au fond du bassin biochimique, le dispositif d'aération externe (9) étant configuré pour aérer et oxygéner les eaux usées et fournir une force de levage, de sorte que les boues d'eaux usées sont soumises à un strippage entre le réservoir extérieur à flux ascendant (1) et le réservoir intérieur de reflux (2), en formant une zone montante, et le niveau d'eau entre le réservoir extérieur à flux ascendant (1) et le réservoir intérieur de reflux (2) est plus haut que le niveau d'eau entre le réservoir intérieur de reflux (2) et la chemise intérieure d'écran d'air (3) ;
c. éliminer des bulles d'air des eaux usées à l'extrémité supérieure de la zone montante entre le réservoir extérieur à flux ascendant (1) et le réservoir intérieur de reflux (2) à l'étape b, pendant que les eaux usées s'écoulent en même temps depuis le niveau d'eau supérieur entre le réservoir extérieur à flux ascendant (1) et le réservoir intérieur de reflux (2) jusqu'au niveau d'eau inférieur entre le réservoir intérieur de reflux (2) et la chemise intérieure d'écran d'air (3) ;
d. augmenter le niveau d'eau entre le réservoir intérieur de reflux (2) et la chemise intérieure d'écran d'air (3) à l'étape c pour aller plus haut que le niveau d'eau du bassin biochimique (10), de sorte qu'une zone de reflux à flux descendant est formée entre le réservoir intérieur de reflux (2) et la chemise intérieure d'écran d'air (3) ;
e. séparer, par la combinaison de la chemise intérieure (3), de l'élément conique d'immersion de boues (4) et du batardeau d'évacuation d'eau (7) agissant comme un réservoir de sédimentation, les sédiments d'eaux usées dans la zone de reflux à l'étape d, les eaux usées avec les boues retournant au fond du bassin biochimique (10) via le tuyau de reflux (5) au bas de l'élément conique d'immersion de boues (4), le liquide propre séparé étant évacué en continu via le batardeau d'évacuation d'eau (7) dans la chemise intérieure d'écran d'air (3) ; et
f. envoyer les boues d'eaux usées renvoyées au fond du bassin biochimique (10) jusqu'à la zone montante entre le réservoir extérieur à flux ascendant (1) et le réservoir intérieur de reflux (2) sous l'action du dispositif d'aération externe (9), en formant ainsi une circulation à grande échelle d'eaux usées allant du fond du bassin biochimique (10) jusqu'à la zone montante et de la zone de reflux jusqu'à l'élément conique d'immersion de boues (4) et du tuyau de reflux (5) jusqu'au fond du bassin biochimique (10), en créant une circulation à grande échelle et un écoulement dans une direction axiale du dispositif.

2. Combinaison selon la revendication 1, dans laquelle la totalité du réservoir extérieur à flux ascendant (1), du réservoir intérieur de reflux (2) et de la chemise intérieure d'écran d'air (3) a une forme choisie parmi le groupe constitué d'un réservoir rectangulaire coaxial et d'un cylindre.

3. Combinaison selon la revendication 2, dans laquelle l'élément conique d'immersion de boues (4) a la forme d'un cône circulaire ou rectangulaire qui correspond au réservoir intérieur de reflux (2).

4. Combinaison selon la revendication 1, dans laquelle le bassin biochimique (10) est disposé avec au moins un dispositif de reflux de strippage à l'air et de sédimentation.

5. Combinaison selon la revendication 1, dans laquelle un dispositif de collecte et d'élimination d'écume est disposé entre le réservoir extérieur à flux ascendant (1) et le réservoir intérieur de reflux (2).

6. Procédé d'utilisation de la combinaison de la revendication 1, comportant les étapes de :
a. injecter des eaux usées dans le bassin biochimique (10), le niveau d'eau des eaux usées étant plus haut que l'extrémité supérieure du réservoir intérieur de reflux (2) et plus bas que les extrémités supérieures à la fois du réservoir extérieur à flux ascendant (1) et de la chemise intérieure d'écran d'air (3),
b. activer le dispositif d'aération externe (9) disposé au fond du bassin biochimique, le dispositif d'aération externe (9) étant configuré pour aérer et oxygéner les eaux usées et fournir une force de levage, de sorte que les boues d'eaux usées sont soumises à un strippage entre le réservoir extérieur à flux ascendant (1) et le réservoir intérieur de reflux (2), en formant une zone montante, et le niveau d'eau entre le réservoir extérieur à flux ascendant (1) et le réservoir intérieur de reflux (2) est plus haut que le niveau d'eau entre le réservoir intérieur de reflux (2) et la chemise intérieure d'écran d'air (3) ;
c. éliminer des bulles d'air des eaux usées à l'extrémité supérieure de la zone montante entre le réservoir extérieur à flux ascendant (1) et le réservoir intérieur de reflux (2) à l'étape b, pendant que les eaux usées s'écoulent en même temps depuis le niveau d'eau supérieur entre le réservoir extérieur à flux ascendant (1) et le réservoir intérieur de reflux (2) jusqu'au niveau d'eau inférieur entre le réservoir intérieur de reflux (2) et la chemise intérieure d'écran d'air (3) ;
d. augmenter le niveau d'eau entre le réservoir intérieur de reflux (2) et la chemise intérieure d'écran d'air (3) à l'étape c pour aller plus haut que le niveau d'eau du bassin biochimique (10), de sorte qu'une zone de reflux à flux descendant est formée entre le réservoir intérieur de reflux (2) et la chemise intérieure d'écran d'air (3) ;
e. séparer, par la combinaison de la chemise intérieure (3), de l'élément conique d'immersion de boues (4) et du batardeau d'évacuation d'eau (7) agissant comme un réservoir de sédimentation, les sédiments d'eaux usées dans la zone de reflux à l'étape d, les eaux usées avec les boues retournant au fond du bassin biochimique (10) via le tuyau de reflux (5) au bas de l'élément conique d'immersion de boues (4), le liquide propre séparé étant évacué en continu via le batardeau d'évacuation d'eau (7) dans la chemise intérieure d'écran d'air (3) ; et
f. envoyer les boues d'eaux usées renvoyées au fond du bassin biochimique (10) jusqu'à la zone montante entre le réservoir extérieur à flux ascendant (1) et le réservoir intérieur de reflux (2) sous l'action du dispositif d'aération externe (9), en formant ainsi une circulation à grande échelle d'eaux usées allant du fond du bassin biochimique (10) jusqu'à la région montante et de la zone de reflux jusqu'à l'élément conique d'immersion de boues (4) et du tuyau de reflux (5) jusqu'au fond du bassin biochimique (10), en créant une circulation à grande échelle et un écoulement dans une direction axiale du dispositif.,
